(19) Europäisches Patentamt
European Patent Office
Office européen des brevets

(11) **EP 2 925 673 B1**

(12) **FASCICULE DE BREVET EUROPEEN**

(45) Date de publication et mention
de la délivrance du brevet:
**30.01.2019   Bulletin 2019/05**

(51) Int Cl.:
*C01G 27/02* (2006.01)       *C01F 17/00* (2006.01)
*B05B 7/22* (2006.01)         *C23C 4/11* (2016.01)
*C23C 4/134* (2016.01)        *B65D 25/14* (2006.01)

(21) Numéro de dépôt: **13824014.8**

(22) Date de dépôt: **29.11.2013**

(86) Numéro de dépôt international:
**PCT/IB2013/060514**

(87) Numéro de publication internationale:
**WO 2014/083544 (05.06.2014 Gazette 2014/23)**

(54) **POUDRE HAUTE PURETÉ DESTINÉE À LA PROJECTION THERMIQUE**

HOCHREINES PULVER ZUM THERMISCHEN SPRITZEN

HIGHLY PURE POWDER INTENDED FOR THERMAL SPRAYING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.11.2012  FR 1261421
07.12.2012  US 201261734744 P**

(43) Date de publication de la demande:
**07.10.2015   Bulletin 2015/41**

(73) Titulaire: **Saint-Gobain Centre De Recherches
Et D'etudes Europeen
92400 Courbevoie (FR)**

(72) Inventeurs:
• **BILLIERES, Dominique**
  **F-84450 Saint Saturnin Les Avignon (FR)**
• **ALIMANT, Alain**
  **F-Montfavet 84140 (FR)**
• **WALLAR, Howard**
  **Rutland, Massachusetts 01543 (US)**

(74) Mandataire: **Nony
11 rue Saint-Georges
75009 Paris (FR)**

(56) Documents cités:
EP-A2- 1 167 565        US-A1- 2006 116 274
US-A1- 2011 129 399     US-B2- 6 916 534

**Description**

**Domaine technique**

L'invention concerne une poudre apte à être déposée par plasma, un procédé pour fabriquer de telle poudre, et un revêtement obtenu par projection plasma de ladite poudre.

**Etat de la technique**

Les surfaces internes des chambres utilisées pour traiter (par exemple par gravure plasma (en anglais «*plasma etch* »)) des semi-conducteurs, par exemple des plaquettes de silicium, sont classiquement protégées avec un revêtement céramique appliqué par projection plasma. Ce revêtement doit être hautement résistant aux plasmas comprenant des halogènes ou aux environnements hautement corrosifs. La projection plasma requiert, comme poudre d'alimentation, une poudre présentant une bonne fluidité et une morphologie de particule permettant un chauffage adapté pendant la projection. En particulier, la taille des particules doit être suffisante pour que les particules pénètrent dans le plasma et pour limiter les pertes par vaporisation.

Par exemple, les poudres très fines directement obtenues par des procédés de fabrication chimique ou pyrolytique ne sont pas adaptées pour la projection plasma sans étape additionnelle de consolidation pour former de plus gros (et poreux) agglomérats, en particulier des agglomérats frittés. Puisque la projection plasma ne mène pas à la fusion de tous les agglomérats, le revêtement résultant présente une porosité. La porosité totale du revêtement obtenu par projection d'agglomérats frittés est typiquement de 2-3%, ce qui ne serait pas approprié pour protéger les surfaces internes d'une chambre de gravure pour semi-conducteurs. En particulier, les poudres frittées décrites dans US6,916,534, US2007/077363 ou US2008/0112873 ne peuvent pas mener à un revêtement très dense par projection thermique. De plus, les revêtements obtenus à partir d'agglomérats poreux conduisent, dans le temps, à la libération de particules quand ils sont exposés à des environnements corrosifs.

US 7,931,836 ou US 2011/0129399 divulguent une poudre de particules résultant d'une fusion plasmique pour former des gouttelettes liquides qui se solidifient en chute libre. Dans certains modes de réalisation, plus d'environ 90% des particules de matière première peuvent être totalement ou partiellement transformées sous forme liquide. La densité apparente de la poudre résultante est comprise entre 1,2 et 2,2 g/cm$^3$.

Dans l'application citée ci-dessus, les poudres obtenues par broyage d'une masse fondue ne sont pas appropriées non plus, à cause des impuretés qui sont ajoutées durant l'étape de broyage.

Les oxydes de terres rares et/ou l'oxyde d'hafnium et/ou les oxydes d'yttrium-aluminium sont connus pour présenter une bonne résistance intrinsèque aux attaques chimiques. Cependant, ils ont une haute température de fusion et une faible diffusion thermique. Il est donc difficile d'obtenir un revêtement très dense à partir de ces particules par projection plasma.

Un objet de l'invention est de fournir une poudre qui puisse être efficacement projetée par plasma, avec une bonne productivité, et qui puisse conduire à un revêtement très pur et extrêmement dense.

**Résumé de l'invention**

Dans ce but, l'invention fournit une poudre (ci-après « poudre d'alimentation ») de particules (ci-après « particules d'alimentation »), plus de 95% en nombre desdites particules présentant une circularité supérieure ou égale à 0,85, ladite poudre contenant plus de 99,8% d'un oxyde de terre rare et/ou d'oxyde d'hafnium et/ou d'un oxyde d'yttrium-aluminium, en pourcentage par masse sur la base des oxydes, et ayant :

- une taille médiane de particule $D_{50}$ comprise entre 10 et 40 $\mu$m [microns] et un indice de dispersion de taille ($D_{90}$ - $D_{10}$)/$D_{50}$ inférieur à 3 ;
- un pourcentage en nombre de particules ayant une taille inférieure ou égale à 5 $\mu$m qui est inférieur à 5% ;
- un indice de dispersion de densité apparente ($P_{<50}$ - P)/P inférieur à 0,2,

le volume spécifique cumulé des pores ayant un rayon inférieur à 1 $\mu$m étant inférieur à 10% du volume apparent de la poudre,
dans laquelle les percentiles $D_n$ de la poudre sont les tailles de particule correspondant aux pourcentages, en nombre, de n%, sur la courbe de distribution cumulée de la taille des particules de la poudre, les tailles de particule étant classées par ordre croissant,
la densité $P_{<50}$ étant la densité apparente de la fraction des particules ayant une taille inférieure ou égale à $D_{50}$, et la densité P étant la densité apparente de la poudre.

Une poudre d'alimentation selon l'invention est donc une poudre très pure, composée en grande partie de particules sphériques. Cette poudre est remarquable, en particulier, par la faible dispersion de taille des particules, en ce que la densité apparente des particules ayant une taille inférieure à la taille médiane de particule $D_{50}$ est sensiblement la même que celle des particules ayant une taille supérieure ou égale à $D_{50}$, et en ce qu'elle comprend peu de particules très fines ayant une taille inférieure ou égale à 5 $\mu$m.

Une poudre d'alimentation d'après l'invention peut aussi comprendre une ou plusieurs des caractéristiques optionnelles suivantes :

- Plus de 95%, de préférence plus de 99%, de préférence plus de 99,5% en nombre desdites particules ont une circularité supérieure ou égale à 0,87, de préférence supérieure ou égale à 0,90.

- La poudre contient plus de 99,9%, plus de 99,950%, plus de 99,990%, de préférence plus de 99,999% d'un oxyde de terre rare et/ou d'oxyde d'hafnium et/ou d'un oxyde d'yttrium-aluminium, en particulier de YAG. La quantité des autres oxydes est donc si faible qu'elle ne peut avoir d'avoir d'effet significatif sur les résultats obtenus avec une poudre d'alimentation selon l'invention.

- Les oxydes représentent plus de 98%, plus de 99%, plus de 99,5%, plus de 99,9%, plus de 99,95%, plus de 99,985% ou plus de 99,99% de la masse de la poudre.

- Ladite terre rare est choisie dans le groupe formé par l'Yttrium (Y), le Gadolinium (Gd), le Scandium (Sc), le Dysprosium (Dy), le Néodyme (Nd), et l'Ytterbium (Yb). De préférence, ladite terre rare est l'yttrium.

- Ledit oxyde d'yttrium-aluminium est un composite oxyde d'yttrium-aluminium, de préférence le YAG (Yttrium-Aluminium Garnet $Y_3Al_5O_{12}$, comprenant environ 58% en masse d'oxyde d'yttrium) et/ou le YAP (pérovskite d'Yttrium-Aluminium comprenant environ 68,9% en masse d'oxyde d'yttrium).

- La taille médiane des particules ($D_{50}$) de la poudre est supérieure à 15 $\mu$m et/ou inférieure à 30 $\mu$m.

- Le percentile 10 ($D_{10}$) des tailles de particule est supérieur à 1 $\mu$m, de préférence supérieur à 5 $\mu$m, de préférence supérieur à 10 $\mu$m, ou encore supérieur à 13 $\mu$m.

- Le percentile 90 ($D_{90}$) des tailles de particule est inférieur à 60 $\mu$m, de préférence inférieur à 50 $\mu$m, de préférence inférieur à 40 $\mu$m.

- Le percentile 99,5 ($D_{99,5}$) des tailles de particule est inférieur à 80 $\mu$m, de préférence inférieur à 60 $\mu$m.

- L'indice de dispersion de taille ($D_{90}$-$D_{10}$)/$D_{50}$ est de préférence inférieur à 2,2, de préférence inférieur à 2,0, de préférence inférieur à 1,8, de préférence inférieur à 1,5, de préférence inférieur à 1,3, de préférence inférieur à 1,1, de préférence inférieur à 1, ou de préférence encore inférieur à 0,9 et de préférence supérieur à 0,4, de préférence supérieur 0,7, de préférence supérieur à 0,8.

- De préférence, la poudre présente un type de dispersion monomodal, c'est-à-dire un seul pic principal.

- Le pourcentage en nombre des particules d'alimentation ayant une taille inférieure à 10 $\mu$m est de préférence inférieur à 5%, de préférence inférieur à 4,5%, de préférence inférieur à 4%, de préférence inférieur à 3%, de préférence inférieur à 2,5%, de préférence inférieur à 2%.

- Le pourcentage en nombre des particules d'alimentation ayant une taille inférieure à 5 $\mu$m est de préférence inférieur à 4% de préférence inférieur à 3%, de préférence inférieur à 2%, de préférence inférieur à 1,5%, de préférence inférieur à 1%.

- Le volume spécifique cumulé des pores de rayon inférieur à 1 $\mu$m est inférieur à 8%, de préférence inférieur à 6%, de préférence inférieur à 5%, de préférence inférieur à 4%, de préférence inférieur à 3,5% du volume apparent de la poudre.

- La surface spécifique est de préférence inférieure à 5 m$^2$/g, de préférence inférieure à 3 m$^2$/g, de préférence inférieure à 2 m$^2$/g, de préférence inférieure à 1 m$^2$/g, de préférence inférieure à 0,5 m$^2$/g.

- L'indice de dispersion de densité apparente ($P_{<50}$-P)/P est de préférence inférieur à 0,15, de préférence inférieur à 0,1.

- La densité relative de la poudre d'alimentation est de préférence supérieure à 0,4 et/ou inférieure à 0,8, de préférence supérieure à 0,45 et/ou inférieure à 0,7

- La densité apparente de la poudre est supérieure à 2,25 g/cm$^3$, de préférence supérieure à 2,30 g/cm$^3$, de préférence supérieure à 2,35 g/cm$^3$, de préférence supérieure à 2,40 g/cm$^3$, encore de préférence supérieure à 2,45 g/cm$^3$.

L'invention concerne encore un procédé de fabrication d'une poudre d'alimentation selon l'invention comprenant les étapes successives suivantes :

a) granulation de particules de façon à obtenir une poudre de granules ayant une taille médiane $D_{50}$ comprise entre 20 et 60 $\mu$m [microns] et comprenant plus de 99,8% d'un oxyde de terre rare et/ou d'oxyde d'hafnium et/ou d'un oxyde d'yttrium-aluminium, en pourcentage en masse sur la base des oxydes ;

b) injection de ladite poudre de granules, *via* un gaz vecteur, à travers un injecteur jusqu'à un jet de plasma généré par un pistolet à plasma, de façon à obtenir des gouttelettes en fusion ;

c) refroidissement desdites gouttelettes en fusion, de façon à obtenir une poudre d'alimentation selon l'invention ;

d) optionnellement, sélection granulométrique, de préférence par tamisage ou par classification pneumatique, de ladite poudre d'alimentation.

De préférence, il n'y a pas d'étape intermédiaire de consolidation, et en particulier pas de frittage, entre les étapes a) et b). Cette absence d'étape de consolidation intermédiaire améliore avantageusement la pureté de la poudre d'alimentation.

Un procédé de fabrication d'une poudre selon l'invention peut aussi comprendre une ou plusieurs des caractéristiques optionnelles suivantes :

- A l'étape a), la granulation est de préférence un procédé d'atomisation ou séchage par pulvérisation (« spray drying » en anglais) ou de pelletisation (transformation en pellets).

- A l'étape a), la composition minérale de la poudre de granules comprend plus de 99,9%, plus de 99,95%, plus de 99,99%, de préférence plus de 99,999% d'un oxyde d'une terre rare et/ou d'oxyde d'hafnium et/ou d'un oxyde d'yttrium-aluminium, en pourcentage en masse sur la base des oxydes.

- La circularité médiane $C_{50}$ de la poudre de granules est de préférence supérieure à 0,85, de préférence supérieure à 0,90, de préférence supérieure à 0,95, et encore de préférence supérieure à 0,96.

- Le centile $C_5$ est de préférence supérieur ou égal à 0,85, de préférence supérieur ou égal à 0,90.

- Le rapport de forme médian $A_{50}$, de la poudre de granules est de préférence supérieur à 0,75, de préférence supérieur à 0,8.

- La surface spécifique de la poudre de granules est de préférence inférieure à 15 m$^2$/g, de préférence inférieure à 10 m$^2$/g, de préférence inférieure à 8 m$^2$/g, de préférence inférieure à 7 m$^2$/g.

- Le volume cumulé des pores ayant un rayon inférieur à 1 $\mu$m, mesuré par porosimétrie au mercure, de la poudre de granules est de préférence inférieur à 0,5 cm$^3$/g, de préférence inférieur à 0,4 cm$^3$/g ou encore de préférence inférieur à 0,3 cm$^3$/g.

- La densité apparente de la poudre de granules est de préférence supérieure à 0,5 g/cm$^3$, de préférence supérieure à 0,7 g/cm$^3$, de préférence supérieure à 0,90 g/cm$^3$, de préférence supérieure à 0,95 g/cm$^3$, de préférence inférieure à 1,5 g/cm$^3$, de préférence inférieure à 1,3 g/cm$^3$, de préférence inférieure à 1,1 g/cm$^3$.

- Le percentile 10 ($D_{10}$) des tailles de particule de ladite poudre de granules est de préférence supérieur à 10 $\mu$m, de préférence supérieur à 15 $\mu$m, de préférence supérieur à 20 $\mu$m.

- Le percentile 90 ($D_{90}$) des tailles de particule de ladite poudre est de préférence inférieur à 90 $\mu$m, de préférence inférieur à 80 $\mu$m, de préférence inférieur à 70 $\mu$m, de préférence inférieur à 65 $\mu$m.

- La poudre de granules a de préférence une taille médiane $D_{50}$ comprise entre 20 et 60 $\mu$m [microns].

- La poudre de granules a de préférence un $D_{10}$ compris entre 20 et 25 $\mu$m et un $D_{90}$ compris entre 60 et 65 $\mu$m.

- Le percentile 99,5 ($D_{99.5}$) des tailles de particule de ladite poudre de granules est de préférence inférieur à 100 $\mu$m, de préférence inférieur à 80 $\mu$m, de préférence inférieur à 75 $\mu$m.

- L'indice de dispersion de taille ($D_{90}$ - $D_{10}$) / $D_{50}$ de ladite poudre de granules est de préférence inférieur à 2, de préférence inférieur à 1,5, de préférence inférieur à 1,2, encore de préférence inférieur à 1,1.

- A l'étape b), le diamètre de(s) l'orifice(s) du (des) injecteurs(s) est supérieur à 1,8 mm, de préférence supérieur à 1,9 mm, de préférence supérieur ou égal à 2,0 mm.

- Le débit du gaz vecteur (par orifice d'injecteur (c'est-à-dire par « ligne de poudre »)) est inférieur à 5,5 1/min, de préférence inférieur à 5,0 1/min, de préférence inférieur à 4,5 1/min, de préférence inférieur à 4,0 1/min, de préférence inférieur ou égal à 3,5 1/min.

- La poudre de granules est injectée dans le jet de plasma à un débit d'alimentation de 30 à 60 g/min par orifice d'injecteur.

- Le débit d'alimentation total en granules (pour tous les orifices d'injecteur) est supérieur à 90 g/min, et de préférence inférieur à 180 g/min, de préférence inférieur à 160 g/min, de préférence inférieur à 140 g/min, de préférence inférieur ou égal à 120 g/min.

- De préférence, à l'étape c), le refroidissement des gouttelettes en fusion est tel que, jusqu'à 500°C, la vitesse de refroidissement moyenne est comprise entre 50 000 et 200 000 °C/s, de préférence comprise entre 80 000 et 150 000 °C/s.

L'invention concerne encore une torche à plasma pour fabriquer, de préférence avec un procédé selon l'invention, une poudre d'alimentation selon l'invention, ladite torche comprenant un pistolet à plasma configuré pour générer un jet de plasma selon un axe X, et un injecteur pour injecter une poudre de granules dans ledit jet de plasma, ledit axe X formant un angle $\alpha$ inférieur à 30°, inférieur à 20°, inférieur à 10°, inférieur à 5°, de préférence nul, avec une ligne verticale.
Une torche à plasma selon l'invention produit avantageusement une poudre d'alimentation qui est très pure et dense, avec peu de satellites, la densité apparente de la poudre atteignant 2,3 g/cm$^3$ et plus, à comparer avec la densité préférée de 1,8 g/cm$^3$ et la valeur de 2,2 g/cm$^3$ pour un exemple divulgué dans US 7,931,836 et US 2011/0129399.
Une torche à plasma selon l'invention peut encore comprendre une ou plusieurs des caractéristiques optionnelles suivantes :

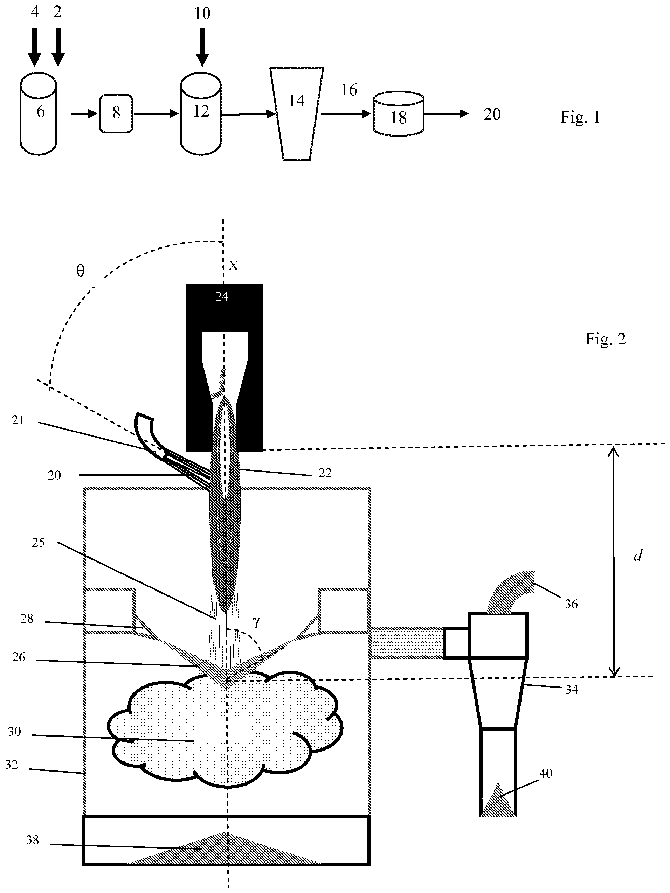

- De préférence, la torche à plasma comprend au moins une buse agencée de façon à injecter un fluide de refroidissement, de préférence de l'air, de façon à refroidir les gouttelettes résultant du chauffage de la poudre de granules injectée dans le jet de plasma. Le fluide de refroidissement est de préférence injecté vers l'aval du jet de plasma (comme représenté sur la figure 2) et l'angle $\gamma$ entre le trajet desdites gouttelettes et le trajet du fluide de refroidissement est de préférence inférieur ou égal à 80°, de préférence inférieur ou égal à 60° et/ou supérieur ou égal à 10°, de préférence supérieur ou égal à 20°, de préférence supérieur ou égal à 30°. De préférence, l'axe d'injection Y de n'importe quelle buse et l'axe X du jet de plasma sont sécants.

- De préférence, la distance $d$ entre la surface externe d'une anode du pistolet à plasma et la zone de refroidissement par le fluide de refroidissement injecté est comprise entre 50 mm et 400 mm, de préférence comprise entre 100 mm et 300 mm.

- De préférence, la torche comprend plusieurs dites buses, de préférence régulièrement espacées autour dudit axe X, de préférence de façon à générer un flux de fluide de refroidissement substantiellement conique ou annulaire autour de l'axe X.

L'invention concerne également un procédé de projection thermique comprenant une étape de projection plasma d'une poudre d'alimentation selon l'invention sur un substrat afin d'obtenir un revêtement.

L'invention concerne également un corps comprenant un substrat et un revêtement recouvrant, au moins partiellement, ledit substrat, ledit revêtement comprenant plus de 99,8% d'un oxyde de terre rare et/ou d'oxyde d'hafnium et/ou d'un oxyde d'yttrium-aluminium, en pourcentage en masse sur la base des oxydes, et présentant une porosité inférieure ou égale à 1,5% , mesurée sur une photographie d'une section polie dudit revêtement. De préférence, la porosité du revêtement est inférieure à 1 %.

De préférence, le revêtement comprend plus de 99,9%, plus de 99,95%, plus de 99,97%, plus de 99,98%, plus de 99,99%, de préférence plus de 99,999% d'un oxyde de terre rare et/ou d'oxyde d'hafnium et/ou d'un oxyde d'yttrium-aluminium, en pourcentage en masse sur la base des oxydes.

Un tel revêtement peut être fabriqué avec un procédé de projection thermique selon l'invention.

Le substrat peut être une paroi d'un four utilisé dans le traitement de semi-conducteurs.

Le four peut contenir des semi-conducteurs, en particulier des plaquettes de silicium. Le four peut être équipé de moyens de dépôt chimique en phase vapeur (CVD) ou de moyens de dépôt physique en phase vapeur (PVD).

## Définitions

- Les « impuretés » sont les constituants inévitables, involontairement et nécessairement introduits avec les matières premières ou résultant des réactions entre les constituants. Les impuretés ne sont pas des constituants nécessaires mais seulement des constituants tolérés. Le niveau de pureté est préférablement mesuré par GDMS (spectroscopie de masse à décharge luminescente) qui est plus précise que l'AES-ICP (spectromètre d'émission atomique à plasma inductif couplé).

- La « circularité » des particules de la poudre est conventionnellement déterminée de la façon suivante : La poudre est dispersée sur une vitre plane. Les images des particules individuelles sont obtenues en scannant la poudre dispersée sous un microscope optique, tout en gardant les particules au point, la poudre étant illuminée par le dessous de la vitre. Ces images peuvent être analysées en utilisant un appareil du type Morphologi® G3 commercialisé par la société Malvern.

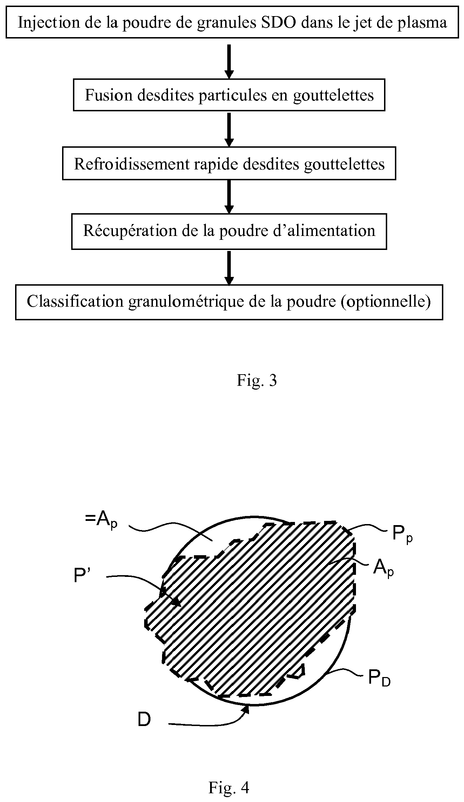

  Comme représenté sur la figure 4, pour évaluer la « circularité » $C$ d'une particule P', on détermine le périmètre $P_D$ du disque D présentant une aire égale à l'aire $A_p$ de la particule P' sur une image de cette particule. On détermine

  $$C = \frac{2 * \sqrt{\pi A_p}}{P_p}.$$

  par ailleurs le périmètre $P_p$ de cette particule. La circularité est égale au rapport de $P_D/P_p$. Ainsi

  Plus la particule est de forme allongée, plus la circularité est faible.

  Le manuel d'utilisation du SYSMEX FPIA 3000 décrit également cette procédure (voir « detailed specification sheets » sur www.malvern.co.uk).

  Pour déterminer un percentile de circularité (décrit ci-après), la poudre est versée sur une vitre plane et observée comme expliqué précédemment. Le nombre de particules comptées devrait être supérieur à 250 pour que le percentile mesuré soit sensiblement identique, quelle que soit la façon dont la poudre est versée sur la vitre.

- Le rapport de forme $A$ d'une particule est défini comme le rapport de la largeur de la particule (sa plus grande dimension perpendiculairement à la direction de sa longueur) et de sa longueur (sa plus grande dimension).

- Pour déterminer un percentile de rapport de forme, la poudre est versée sur une vitre plane et observée comme expliqué précédemment, pour mesurer les longueurs et les largeurs des particules. Le nombre de particules comptées devrait être supérieur à 250 pour que le percentile mesuré soit sensiblement identique, quelle que soit la façon dont la poudre est versée sur la vitre.

- Les percentiles ou « centiles » 10 ($P_{10}$), 50 ($P_{50}$), 90 ($P_{90}$) et 99,5 ($P_{99,5}$), et plus généralement « n » $P_n$ d'une propriété P des particules d'une poudre de particules sont les valeurs de cette propriété correspondant aux pourcentages, en nombre, de 10 %, 50 %, 90 %, 99,5 % et n%, respectivement, sur la courbe de distribution cumulée relative à cette propriété des particules de la poudre, les valeurs relatives à cette propriété étant classées par ordre croissant. En particulier, les percentiles $D_n$, $A_n$, et $C_n$ sont relatifs à la taille, au rapport de forme et à la circularité, respectivement.

Par exemple, 10 %, en nombre, des particules de la poudre ont une taille inférieure à $D_{10}$ et 90 % des particules en nombre ont une taille supérieure ou égale à $D_{10}$. Les percentiles relatifs à la taille peuvent être déterminés à l'aide d'une distribution granulométrique réalisée à l'aide d'un granulomètre laser.

De même, 5% en nombre de particules de la poudre ont cette circularité inférieure au percentile $C_5$. En d'autres mots, 95% en nombre de particules de cette poudre ont une circularité supérieure ou égale à $C_5$.

Le percentile 50 est classiquement appelé le percentile « médian ». Par exemple, $C_{50}$ est conventionnellement appelé « circularité médiane ». De même, le percentile $D_{50}$ est conventionnellement appelé « taille médiane ». Le percentile $A_{50}$ se réfère aussi conventionnellement au « rapport de forme médian ».

- Par « taille d'une particule », on entend la taille d'une particule donnée classiquement par une caractérisation de distribution granulométrique réalisée avec un granulomètre laser. Le granulomètre laser utilisé peut être un Partica LA-950 de la société HORIBA.

- Le pourcentage ou la fraction en nombre de particules ayant une taille inférieure ou égale à une taille maximale déterminée peut être réalisée à l'aide d'un granulomètre laser.

- Le volume spécifique cumulé des pores de rayon inférieur à 1 $\mu$m, en pourcentage du volume apparent de poudre, est conventionnellement mesuré par porosimétrie au mercure suivant la norme ISO 15901-1. Il peut être mesuré avec un porosimètre MICROMERITICS.

- La « densité apparente » (« *bulk density* » en anglais) P d'une poudre de particules est conventionnellement définie comme le rapport de la masse de la poudre divisée par la somme des volumes apparents desdites particules. En pratique, elle peut être mesurée avec un porosimètre MICROMERITICS à une pression de 3,5kPa.

- Le volume apparent d'une poudre de particules est conventionnellement défini comme la somme des volumes apparents desdites particules. En pratique, le volume apparent d'une poudre de particules est calculé par la masse de la poudre divisée par sa densité apparente.

- La « densité relative » d'une poudre est égale à sa densité apparente divisée par sa densité réelle. La densité réelle peut être mesurée par pycnométrie à l'hélium.

- La « porosité » d'un revêtement peut être évaluée par analyse d'images d'une coupe transversale polie du revêtement. Le substrat revêtu est sectionné en utilisant une machine de découpe de laboratoire, par exemple en utilisant un appareil Struers Discotom avec un disque de coupe à base d'alumine. L'échantillon du revêtement est ensuite monté dans une résine, par exemple en utilisant une résine de montage à froid du type Struers Durocit. L'échantillon monté est ensuite poli en utilisant des médias de polissage de finesse croissante. On peut utiliser du papier abrasif ou, de préférence, des disques de polissage avec une suspension de polissage appropriée. Une procédure de polissage classique commence par un dressage de l'échantillon (par exemple avec un disque abrasif Struers Piano 220), puis en changeant les draps de polissage associés aux suspensions abrasives. La taille de grains abrasifs est diminuée à chaque étape de polissage fin, la taille des abrasifs au diamant commençant par exemple à 9 $\mu$m [microns], puis à 3 $\mu$m [microns], pour terminer à 1 $\mu$m [micron] (série Struers DiaPro). Pour chaque taille de grain abrasif, le polissage est arrêté dès que la porosité observée sous microscope optique reste constante. Les échantillons sont soigneusement nettoyés entre les étapes, par exemple avec de l'eau. Une étape de polissage finale, après l'étape de polissage au diamant de 1 $\mu$m, est effectuée à l'aide de silice colloïdale (OP-U Struers, 0,04$\mu$m) associée à un drap de type feutre doux. Après le nettoyage, l'échantillon poli est prêt pour l'observation au microscope optique ou au MEB (microscope électronique à balayage). En raison de sa résolution supérieure et du contraste remarquable, le MEB est préféré pour la production d'images destinées à être analysées. La porosité peut être déterminée à partir des images en utilisant un logiciel d'analyse d'images (par exemple ImageJ, NIH), en ajustant le seuillage. La porosité est donnée en pourcentage de la surface de la section transversale du revêtement.

- La «surface spécifique» est classiquement mesurée par la méthode BET (Brunauer Emmet Teller), comme décrit dans le Journal of American Chemical Society 60 (1938), pages 309 à 316.

- L'opération de "granulation" est un procédé d'agglomération de particules à l'aide d'un liant, par exemple un polymère liant, pour former des particules agglomérées, qui peuvent éventuellement être des granules. La granulation comprend, en particulier, l'atomisation ou séchage par pulvérisation (en anglais « spray-drying ») et/ou l'utilisation d'un granulateur ou d'un appareil de pelletisation, mais n'est pas limitée à ces procédés.

- Un "granule" est une particule agglomérée ayant une circularité de 0,8 ou plus.

- Une étape de consolidation (qui est optionnelle, et n'est pas préférée dans l'invention) est une opération visant à remplacer, dans les granules, les liens dus à des liants organiques par des liens de diffusion: elle est généralement réalisée par un traitement thermique, mais sans fusion totale des granules.

- Le "rendement de dépôt" d'un procédé de projection plasma est défini comme le rapport, en pourcentage en masse, de la quantité de matière déposée sur le substrat divisée par la quantité de poudre d'alimentation injectée dans le jet de plasma.

- La «productivité de projection » est définie comme la quantité de matière déposée par unité de temps.

- Les débits en 1/min sont « standards », c'est à dire mesurés à une température de 20° C, sous une pression de 1 atm.

- «Comportant un» ou « comprenant un » doivent être compris comme «comportant au moins un», sauf indication contraire.

- Sauf indication contraire, tous les pourcentages de composition sont des pourcentages en masse sur la base de la masse des oxydes.

- Les propriétés de la poudre peuvent être évaluées par les méthodes de caractérisation utilisées dans les exemples.

## Description rapide des figures

D'autres caractéristiques et avantages de l'invention apparaîtront plus clairement à la lecture de la description qui va suivre et à l'examen des dessins annexés, dans lesquels :

- la figure 1 représente schématiquement un procédé de fabrication d'une poudre séchée par pulvérisation seulement (SDO ou « spray-dried only »);

- la figure 2 représente schématiquement une torche à plasma pour la fabrication d'une poudre d'alimentation selon l'invention;

- la figure 3 représente schématiquement un procédé pour fabriquer une poudre d'alimentation selon l'invention;

- la figure 4 illustre la méthode qui est utilisée pour évaluer la circularité d'une particule,

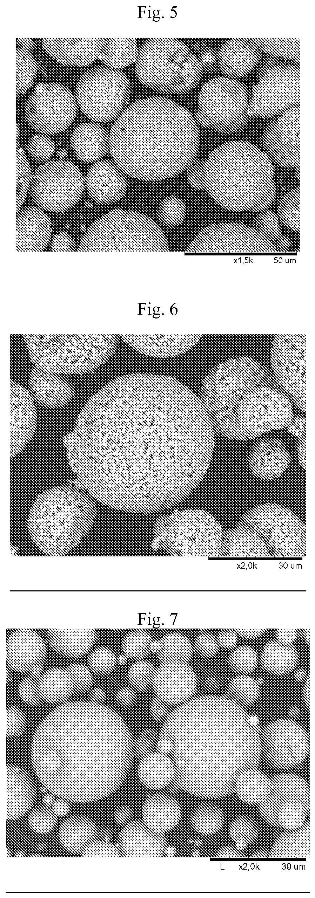

- la figure 5 est une photographie de la poudre G3 de particules (SDO) séchée par pulvérisation seulement selon l'invention,

- la figure 6 est une photographie de la poudre de particules G4,

- la figure 7 est une photographie de la poudre obtenue selon l'exemple I1 illustrant l'invention.

## Description détaillée

Procédé de fabrication d'une poudre d'alimentation

La figure 1 illustre un mode de réalisation de l'étape a) d'un procédé de fabrication d'une poudre d'alimentation selon l'invention.
Tout procédé connu de granulation peut être utilisé. En particulier, l'homme de l'art sait comment préparer une barbotine adaptée à une granulation.
Dans un mode de réalisation, un mélange liant est préparé par addition de PVA (alcool polyvinylique) 2 dans de l'eau désionisée 4. Ce mélange liant 6 est ensuite filtré à travers un filtre de 5 $\mu$m 8. De l'oxyde d'yttrium en poudre 10 (par exemple de pureté 99,99%), avec une taille médiane de 1 $\mu$m, est mélangé dans le mélange liant filtré pour former une barbotine 12. La barbotine peut comporter en masse, par exemple, 55% d'oxyde d'yttrium et 0,55% de PVA, le complément à 100% étant constitué d'eau. Cette barbotine est injectée dans un atomiseur 14 pour obtenir une poudre de granules 16 ayant un $D_{10}$ de 20 $\mu$m et un $D_{90}$ de 63 $\mu$m. L'homme de l'art sait adapter l'atomiseur pour obtenir la distribution granulométrique souhaitée.

De préférence, les granules sont des agglomérats de particules d'un matériau oxyde présentant une taille médiane inférieure à 3 μm, de préférence inférieure à 2 μm, de préférence inférieure à 1,5 μm.

La poudre de granules peut être tamisée (Tamis de 5 mm 18, par exemple) afin d'éliminer la présence éventuelle de résidus tombés des parois de l'atomiseur.

La poudre résultante 20 est une poudre de granules « séchée par pulvérisation seulement » (« Spray-dried only » ou SDO).

Les figures 2 et 3 illustrent un mode de réalisation de **l'étape b)** de fusion d'un procédé de fabrication d'une poudre d'alimentation selon l'invention.

Une poudre de granules SDO 20, par exemple, telle que fabriquée selon le procédé illustré sur la figure 1, est injectée par un injecteur 21 dans un jet de plasma 22 produit par un pistolet à plasma 24, par exemple un ProPlasma HP. Les techniques classiques d'injection et de projection plasma peuvent être utilisées, de manière à mélanger la poudre de granules SDO avec un gaz vecteur et à injecter le mélange résultant dans le coeur du plasma chaud.

Toutefois, la poudre de granules injectée n'a pas besoin d'être consolidée. En l'absence de toute étape de consolidation intermédiaire, c'est-à-dire dans le mode de réalisation préféré, l'injection doit être faite en douceur pour éviter toute rupture de granules. L'homme du métier sait adapter les paramètres d'injection pour une injection en douceur des granules, et choisir les granules de telle sorte que la poudre d'alimentation obtenue à l'issue des étapes c) ou d) ait une composition et une distribution granulométrique selon l'invention.

Le recours à une injection en douceur n'est pas conventionnel. En effet, il est généralement considéré comme préférable d'injecter les particules de façon à les disperser dans un jet de plasma très visqueux et qui s'écoule à une vitesse très élevée. Lorsque les particules injectées entrent en contact avec un tel jet de plasma, elles sont soumises à des chocs violents, ce qui peut les briser en morceaux. Pour pénétrer dans le jet de plasma, les particules à disperser sont donc généralement injectées avec une vitesse élevée, de manière à bénéficier d'une énergie cinétique élevée. Les particules à injecter doivent également présenter une résistance mécanique élevée pour résister à ces chocs.

Contrairement à la technique classique, dans le mode de réalisation préféré de l'invention, des granules non consolidées, et en particulier des granules non frittées, sont injectés dans une torche à plasma, éventuellement une torche classique, dont les paramètres sont réglés de telle sorte que la vitesse du jet de plasma et la vitesse des granules injectés soient faibles, de préférence, soient aussi faibles que possible. L'homme de l'art sait que la vitesse du jet de plasma peut être réduite en utilisant une anode de grand diamètre et/ou en réduisant la vitesse d'écoulement du gaz primaire. L'homme de l'art sait aussi que la vitesse des granules est déterminée par le débit du gaz vecteur.

Bien sûr, l'énergie du jet de plasma, déterminée par le débit du gaz secondaire, doit être suffisamment élevée pour faire fondre les granules.

La poudre de granules est injectée avec un gaz vecteur, de préférence sans aucun liquide. Le tableau 1 présente les gammes préférées pour les paramètres de l'étape b) de fusion.

Dans le jet de plasma 22, les granules sont fondus en gouttelettes 25.

Cette fusion permet avantageusement de réduire le taux d'impuretés.

A leur sortie de la zone chaude du jet de plasma, les gouttelettes sont rapidement refroidies par l'air froid environnant, mais aussi par une circulation forcée 26 d'un gaz de refroidissement, de préférence de l'air. L'air limite avantageusement l'effet réducteur de l'hydrogène.

De préférence, le refroidissement forcé est généré par un ensemble de buses 28 disposées autour de l'axe X du jet de plasma 22, de manière à créer un écoulement sensiblement conique ou annulaire de gaz de refroidissement.

Le pistolet à plasma 24 est orienté verticalement vers le sol. De préférence, l'angle entre la verticale et l'axe X du pistolet à plasma est inférieur à 10°, de préférence inférieur à 5°. Avantageusement, le flux de gaz de refroidissement est donc parfaitement centré par rapport à l'axe X du jet de plasma.

De préférence, la distance $d$ minimale entre la surface externe de l'anode et la zone de refroidissement (où les gouttelettes entrent en contact avec le fluide de refroidissement injecté) est comprise entre 50 mm et 400 mm, de préférence entre 100 mm et 300 mm.

Avantageusement, le refroidissement forcé limite la génération de satellites, résultant du contact entre de très grosses particules chaudes et de petites particules en suspension dans la chambre de densification 32. De plus, une telle opération de refroidissement permet de réduire la taille globale de l'équipement de traitement, en particulier la taille de la chambre de collecte.

Le refroidissement des gouttelettes 25 permet d'obtenir des particules d'alimentation 30, qui peuvent être extraites dans la partie inférieure de la chambre de densification 32.

La chambre de densification peut être connectée à un cyclone 34, dont les gaz d'échappement sont dirigés vers un collecteur de poussières 36, de façon à séparer de très fines particules 40. Ces particules très fines peuvent résulter de la désintégration des granules fragiles dans le jet de plasma, bien que le procédé préféré de l'invention permette de limiter ces désintégrations. Selon la configuration, certaines particules d'alimentation conformes à l'invention peuvent également être collectées dans le cyclone. De préférence, ces particules d'alimentation peuvent être séparées, en particulier avec un séparateur d'air.

Eventuellement, les particules d'alimentation collectées 38 peuvent être filtrées, de sorte que la taille médiane $D_{50}$ soit comprise entre 10 et 40 $\mu$m [microns].

Le tableau suivant fournit les paramètres préférés pour fabriquer une poudre d'alimentation selon l'invention.

Les caractéristiques d'une colonne sont de préférence, mais pas nécessairement, combinées. Les caractéristiques des deux colonnes peuvent être également combinées

Tableau 1

| Etape b) | | |
|---|---|---|
| | Caractéristiques préférées | Caractéristiques encore plus préférées |
| Pistolet | Pistolet haute performance avec une faible usure (pour traiter la poudre sans la contaminer) | Pistolet ProPlasma HP |
| Anode | Diamètre >7mm | HP8 anode (Diamètre de 8mm) |
| Cathode | Cathode au tungstène dopé | Cathode ProPlasma |
| Injecteur de gaz | Injection partiellement radiale (« swirling gas injection ») | ProPlasma HP setup |
| Courant | 500-700 A | 650 A |
| Puissance | > 40 kW | Environ 45kW |
| Nature du gaz primaire | Ar ou $N_2$ | Ar |
| Débit du gaz primaire | <50 1/min de préférence <40 1/min | 36 1/min |
| Nature du gaz secondaire | $H_2$ | $H_2$ |
| Débit du gaz secondaire | >20 vol% du mélange de gaz plasmagène | Environ 25 vol% du mélange de gaz plasmagène |
| **Injection de la poudre de granules** | | |
| Débit total de poudre injectée (g/min) | <180 g/min | $\leq$ 120 g/min |
| Diamètre des orifices d'injection (mm) | > 1,85 mm | > 2,0 mm |
| Nature du gaz vecteur | Ar ou $N_2$ | Ar |
| Débit du gaz vecteur par orifice d'injection | <5,5 1/min | $\leq$ 3,5 1/min |
| Angle d'injection par rapport à l'axe X du jet de plasma (angle $\theta$ sur la figure 2) | 70°-85° | 75°-83° |
| Distance entre un orifice d'injection et l'axe X du j et de plasma | >10 mm | $\geq$ 12 mm |
| **Refroidissement des gouttelettes** | | |
| Paramètres de refroidissement | Rideau d'air conique ou annulaire, orienté vers l'aval du jet de plasma | |
| Angle $\gamma$ entre la direction d'injection du fluide de refroidissement, depuis une buse, et l'axe X du jet de plasma | Vers l'aval du jet de plasma, $\geq$ 10° | Vers l'aval du jet de plasma, $\geq$ 30° et $\leq$ 60° |
| Débit total du fluide de refroidissement forcé | 10-70 Nm$^3$/h | 35-50 Nm$^3$/h |
| Débit du gaz d'échappement | 100-700 Nm$^3$/h | 250-500 Nm$^3$/h |
| Vitesse moyenne des gouttelettes | <200 m/s | 130-150 m/s |
| Température moyenne des gouttelettes | >2000 °C | Environ 2200 °C |
| Vitesse moyenne de refroidissement | 50 000 à 200 000°C/s | |

Les caractéristiques les plus préférées sont en particulier adaptées pour un débit d'injection de poudre de 120g/min (poudre de granules d'oxyde d'yttrium).

La vitesse et la température des gouttelettes sont évaluées par un système SprayWatch, de la Société Oseir, disposé 100 mm en aval de l'injection de la poudre, avec un débit d'injection de 40 g/min.

La vitesse de refroidissement est estimée pour une poudre ayant une taille médiane $D_{50}$ entre 10 à 40 $\mu$m [microns], sous flux d'air.

La torche à plasma "ProPlasmaHP" est vendue par Saint-Gobain Coating Solution. Cette torche correspond à la torche T1 décrite dans WO2010/103497.

Poudre d'alimentation

Les inventeurs ont découvert que, de façon surprenante, une poudre d'alimentation selon l'invention est très homogène d'une particule d'alimentation à une autre.

Une poudre d'alimentation pure d'oxyde d'yttrium selon l'invention peut présenter une densité apparente de 2,30 g/cm$^3$ à 2,60 g/cm$^3$. Le volume spécifique cumulé des pores de rayon inférieur à 1 $\mu$m, mesuré selon la norme ISO 15901-1, peut être inférieur à 20.10$^{-3}$ cm$^3$/g.

Sans être limité par cette théorie, les inventeurs ont constaté que, de façon surprenante, la plupart des particules ayant une taille inférieure à 20 $\mu$m [microns] sont pleines, c'est-à-dire sans cavité centrale, alors que la plupart des particules ayant une taille supérieure à 20 $\mu$m [microns] sont creuses avec une paroi très dense. Cette observation peut expliquer pourquoi, de façon surprenante, l'indice de dispersion de densité apparente d'une poudre d'alimentation selon l'invention est inférieur à 0,2.

Les particules creuses présentent habituellement une coque qui a une épaisseur d'environ 5 à 10 $\mu$m [microns]. La taille médiane des particules $D_{50}$ étant inférieure à 40 $\mu$m [microns] et l'indice de dispersion de taille $(D_{90}-D_{10})/D_{50}$ étant inférieur à 3, les particules creuses sont donc efficacement fondues dans le jet de plasma, de la même manière que les particules les plus fines pleines. Le pourcentage de particules injectées dans le jet de plasma qui sont complètement fondues est donc très élevé, ce qui peut conduire, en particulier pour un revêtement d'$Y_2O_3$, à une porosité inférieure ou égale à 1%.

La taille médiane des particules $D_{50}$ étant supérieure ou égale à 10 $\mu$m [microns] et l'indice de dispersion de taille $(D_{90}-D_{10})/D_{50}$ étant inférieur à 3, la poudre d'alimentation ne contient sensiblement pas de particules très fines. Avantageusement, l'énergie cinétique des particules est donc également adaptée pour une bonne pénétration dans le jet de plasma.

L'indice de dispersion de taille est de préférence supérieur ou égal à 0,4, afin d'éviter des coûts excessifs.

Le faible indice de dispersion de densité apparente et la distribution de taille spécifique d'une poudre d'alimentation selon l'invention conduit avantageusement à un revêtement très homogène et très dense lorsque cette poudre d'alimentation est projetée avec une torche à plasma.

Enfin, la distribution de taille particulière d'une poudre d'alimentation selon l'invention lui confère avantageusement une coulabilité tout à fait adaptée à la projection plasma..

**Dépôt par plasma**

Le dépôt de particules afin de réaliser un revêtement à l'aide d'un pistolet à plasma est une technique classique. Toute technique connue peut être utilisée. Le tableau suivant fournit les paramètres préférés.

Tableau 2

| Dépôt du revêtement : Paramètres préférés | |
|---|---|
| Pistolet | Pistolet ProPlasma HP |
| Anode | HP 6,5 anode (diamètre : 6,5 mm) |
| Cathode | Cathode dopée au tungstène Proplasma |
| Courant | > 600A, de préférence environ 650A |
| Puissance | >40kW, de préférence environ 49kW |
| Nature du gaz primaire | Argon |
| Débit du gaz primaire | >35 1/min, de préférence environ 40 1/min |
| Nature du gaz secondaire | Hydrogène |

(suite)

| Dépôt du revêtement : Paramètres préférés | |
|---|---|
| Débit du gaz secondaire | >20% du mélange plasmagène, de préférence environ 25% |
| Nature du gaz vecteur | Argon |
| Débit du gaz vecteur | Environ 5 1/min |
| Débit d'injection de la poudre d'alimentation (g/min) | 30 à 90, de préférence 50 à 70 |
| Distance de projection | >90 mm, de préférence environ 120mm |
| Diamètre de l'orifice d'injecteur (mm) | 1,8 mm pour 25 à 35 g/min par injecteur |
| Distance entre l'injecteur et l'axe du jet de plasma | < 10 mm, de préférence environ 6 mm |
| Angle d'injection par rapport à l'axe du jet de plasma | 90° (perpendiculaire à l'axe) |
| Vitesse de déplacement du pistolet | > 800 mm/s, de préférence environ 1000 mm/s |
| Pas (mm) | 1-5mm, de préférence environ 2mm |
| Nature du substrat | métal (acier, aluminium, aluminium anodisé...) ou céramique (alumine...) |

Les substrats métalliques peuvent être refroidis, par exemple avec de l'air, par exemple par des buses de refroidissement montées sur la torche à plasma pour maintenir la température du substrat inférieure à 300°C, de préférence inférieure à 150°C. Dans le cas de substrats en céramique, un préchauffage peut être effectué pour améliorer l'adhérence (comme décrit, par exemple, dans le brevet américain n° 7,329,467).

## Exemples

Les exemples suivants sont fournis à des fins d'illustration et ne limitent pas la portée de l'invention.

Les poudres d'alimentation I1 à I5, C1 et C2 ont été fabriquées selon l'invention avec une torche à plasma semblable à la torche à plasma représentée sur la figure 2, à partir d'une source de poudre d'$Y_2O_3$ pure ayant un diamètre médian $D_{50}$ de 1,2 $\mu$m [micron], mesuré avec un analyseur de particules laser Horiba, et une pureté chimique de 99,999% d'$Y_2O_3$.

**À l'étape a),** un mélange liant est préparé par addition de PVA (alcool polyvinylique) liant 2 dans de l'eau déionisée 4. Ce mélange liant est ensuite filtré à travers un filtre de 5 $\mu$m 8. L'oxyde d'yttrium en poudre 10 est mélangé dans le mélange liant filtré pour former une barbotine 12. La barbotine est préparée de façon à comprendre, en pourcentage en masse, 55% d'oxyde d'yttrium et 0,55% de PVA, le complément à 100% étant de l'eau déionisée. La barbotine est mélangée intensivement à l'aide d'un mélangeur à vitesse de cisaillement élevée.

Les granules G3 et G6 sont ensuite obtenus par atomisation de la barbotine, en utilisant un atomiseur. En particulier, la barbotine est atomisée dans la chambre d'un atomiseur GEA Niro SD 6,3 R, la barbotine étant introduite à un débit d'environ 0,38 l/min.

La vitesse de la roue d'atomisation rotative, entraînée par un moteur Niro FS1, est réglée pour obtenir les tailles des granules ciblées. La vitesse de cette roue est plus élevée pour la fabrication des granules G3 que pour la fabrication des granules G6.

Le débit d'air est ajusté pour maintenir la température d'entrée à 295°C et la température de sortie proche de 125°C de sorte que l'humidité résiduelle des granules est comprise entre 0,5% et 1%.

**À l'étape b),** les granules de l'étape a) sont injectés dans un plasma produit avec un pistolet à plasma.

Pour refroidir les gouttelettes, 7 buses Silvent 2021L, vendues par Silvent, ont été fixées sur un porte-buse annulaire Silvent 463, vendu par Silvent. Les buses sont espacées régulièrement le long du porte-buse annulaire, de manière à générer un flux d'air sensiblement conique.

Le rendement de collecte de poudre dans la chambre 38 est le rapport entre la quantité de particules d'alimentation collectée dans la chambre 38 et la quantité totale de granules injectés dans le plasma.

La poudre I1 présente le meilleur compromis entre le rendement, qui doit être aussi élevé que possible, et les pourcentages de particules très fines (<10 $\mu$m et <5 $\mu$m), qui doivent être aussi faibles que possible, avec une densité apparente acceptable.

La poudre I5 est utilisée pour illustrer l'effet de l'indice de dispersion de taille. Cette poudre a été obtenue à partir de granules G6 par traitement plasma.

La poudre d'alimentation comparative G3 a été fabriquée selon la même étape a) que I1 et I5, mais elle n'a pas subi les étapes b) et c) avant sa projection pour former un revêtement.

La poudre d'alimentation comparative G4 a été fabriquée comme G3, mais après l'étape de séchage par pulvérisation (« *spray-drying* »), la poudre a été frittée sous air à 1600°C, pendant une durée de deux heures.

Tableau 3

| Traitement de la poudre | Séchée par pulvérisation + projection plasma | | | | Séchée par pulvérisation seulement | Séchée par pulvérisation et frittée |
|---|---|---|---|---|---|---|
| **Granules (particules obtenues après séchage par pulvérisation)** | | | | | | |
| Référence des granules | G3 | | G6 | | G3 | G4 |
| Type de granules | Poudre d'oxyde d'yttrium séchée par pulvérisation | | | | | |
| Granules $D_{10}$ ($\mu$m) | 23,4 | | 23 | | | |
| Granules $D_{50}$ ($\mu$m) | 39,0 | | 47 | | | |
| Granules $D_{90}$ ($\mu$m) | 63,0 | | 102 | | | |
| Densité apparente moyenne | 1,05 | | 0,95 | | 1,05 | 1,45 |
| Volume spécifique cumulé des pores ayant un rayon inférieur à 1 $\mu$m [micron] ($10^{-3}$ $cm^3$/g de l'échantillon de poudre ) | 260 | | 430 | | 260 | 140 |
| ***Unique étape de consolidation b) : injection*** | | | | | | |
| Débit d'alimentation en granules | 120 g/min | | 150 g/min | | | |
| Nombre d'orifices d'injection (lignes de poudre) | 3 | | 4 | | | |
| Angle d'injection par rapport à l'axe X du jet de plasma (angle $\theta$ sur la figure 2) | 80° vers l'aval | | | | | |
| Distance de l'injecteur (radialement depuis l'axe du pistolet) | 12 mm | 14 mm | 12 mm | 12 mm | | |
| Diamètre de l'injecteur | 2,0 mm | 1,8 mm | 2,0 mm | 1,8 mm | | |
| Débit du gaz vecteur argon (par ligne de poudre) | 3,5 1/min | 6,0 1/min | 3,5 1/min | 6,0 1/min | | |
| ***Unique étape de consolidation b) : fusion*** | | | | | | |
| Pistolet à plasma utilisé | ProPlasma HP | | | | | |
| Diamètre de l'anode du pistolet à plasma | 8 mm | | | | | |
| Tension (V) | 74 | | | | | |
| Puissance (kW) | 48 | | | | | |

(suite)

| | | | | | | | | Séchée par pulvérisation seulement | Séchée par pulvérisation et frittée |
|---|---|---|---|---|---|---|---|---|---|
| **_Unique étape de consolidation b) : fusion_** | | | | | | | | | |
| Mélange de gaz plasmagène | $Ar + H_2$ | | | | | | | | |
| Débit du gaz plasmagène | 48 1/min | | | | | 48 1/min | | | |
| Rapport de $H_2$ dans le gaz plasmagène | 25% | | | | | | | | |
| Intensité de l'arc de plasma | 650A | | | | | 650A | | | |
| Traitement de la poudre | Séchée par pulvérisation + projection plasma | | | | | | | Séchée par pulvérisation seulement | Séchée par pulvérisation et frittée |
| **_Unique étape de consolidation b) : refroidissement_** | | | | | | | | | |
| Buses de refroidissement annulaires | 7 buses Silvent 2021L fixées sur un porte-buse annulaire Silvent 463 | | | | | | | | |
| Débit total d'air de refroidissement (Nm$^3$/h) | 0 | 60 | 42 | 35 | 42 | 42 | | | |
| Débit d'air dans le cyclone (Nm$^3$/h) | 650 | 650 | 650 | 350 | 350 | 350 | | | |
| Rendement de collecte de poudre dans la chambre (28) | 54% | 13% | 30% | 77% | 20% | 59% | 57% | | |
| **Particules d'alimentation collectées (poudre d'alimentation)** | | | | | | | | | |
| Référence | I1 | I2 | 13 | I4 | C1 | 15 | C2 | G3 | G4 |
| $D_{10}(\mu m)$ | 15,7 | 15,7 | 15,8 | 14,9 | 10 | 13,1 | 7 | 23,4 | 15,5 |
| $D_{50}$ ($\mu m$) | 24,9 | 25,0 | 25,0 | 24,1 | 22 | 31,8 | 22 | 39,0 | 27,3 |
| $D_{90}$ ($\mu m$) | 37,2 | 37,4 | 37,0 | 36,8 | 35 | 79,1 | 85 | 63,0 | 43,2 |
| $(D_{90}-D_{10})/ D_{50}$ | 0,86 | 0,87 | 0,85 | 0,91 | 1,1 | 2,1 | 3,5 | 1,0 | 1,0 |
| Fraction en nombre < ou égale à $10\mu m$ | 1,8 % | 2,4 % | 2,4 % | 2,6 % | 10,3 % | 4,5 % | 13,8 % | 1,1 % | 2,6 % |
| Fraction en nombre < ou égale à $5\mu m$ | 0,9% | 1,5 | 1,5 | 1,2 | 5,1% | 0,2% | 8,7% | 1,0% | 0,6% |
| Circularité médiane $C_{50}$ | 0,993 | 0,996 | 0,994 | 0,990 | 0,982 | 0,967 | 0,942 | 0,985 | 0,956 |
| Circularité $C_5$ | 0,902 | 0,909 | 0,905 | 0,888 | 0,895 | 0,862 | 0,839 | 0,843 | 0,854 |
| Rapport de forme médian $A_{50}$ | 0,98 | 0,98 | 0,98 | 0,98 | 0,98 | 0,94 | 0,90 | 0,91 | 0,80 |
| Surface spécifique (m$^2$/g) | 0,44 | 0,27 | 0,41 | 0,35 | 0,57 | 0,52 | 0,80 | 6,2 | 0,88 |

(suite)

| Particules d'alimentation collectées (poudre d'alimentation) | | | | | | | | | |
|---|---|---|---|---|---|---|---|---|---|
| Niveau d'impuretés mesuré par GDMS | <150 ppm | <150 ppm | <150 ppm | <150 ppm | <150 ppm | <150 ppm | <150 ppm | <300 ppm | <300 ppm |
| Densité apparente mesurée par porosimètrie au mercure | 2,37 | 2,50 | 2,49 | 2,31 | 2,53 | 2,25 | 2,1 | 1,05 | 1,45 |
| Densité relative calculée | 0,47 | 0,50 | 0,50 | 0,46 | 0,50 | 0,45 | 0,42 | 0,21 | 0,29 |
| Volume spécifique cumulé des pores ayant un rayon inférieur à 1 $\mu$m [micron] ($10^{-3}$ $cm^3$/g de l'échantillon de poudre) | 13 | 8 | 9 | 13 | 7 | 30 | 80 | 260 | 140 |
| Volume spécifique cumulé des pores ayant un rayon inférieur à 1 $\mu$m [micron] (% du volume apparent de poudre) | 3,1 | 2,0 | 2,2 | 3,0 | 1,8 | 7 | 17 | 27 | 20 |
| $(P_{<50}-P)/P$ ou indice de dispersion de densité apparente | 0,08 | 0,04 | 0,03 | 0,10 | 0,02 | 0,07 | 0,17 | | |

Le tableau 3 montre que des paramètres d'injection douce, avec un grand diamètre d'injecteur et un faible débit du gaz vecteur argon, aident à réduire la quantité de particules très fines dans la poudre d'alimentation d'oxyde d'yttrium pur, qui sont nuisibles au revêtement final. Une faible quantité de particules très fines facilite aussi l'application du revêtement par projection thermique. Elle améliore la coulabilité et le rendement de dépôt.

Les revêtements sur un substrat d'aluminium ont été obtenus en utilisant des poudres d'alimentation I1 I5, C1, C2, G3 et G4. Les paramètres de projection plasma sont résumés dans le tableau 4.

La porosité des revêtements a été mesurée par analyse d'images obtenues par microscopie électronique à balayage (« scanning electron microscope » SEM) sur des sections polies d'échantillons ayant une épaisseur moyenne de 0,4 mm.

Tableau 4

| Exemple | | 1 | 2 | 3* | 4* | 5 | 6* | 7* |
|---|---|---|---|---|---|---|---|---|
| Poudre d'alimentation | | I1 | I1 | G3 | G4 | I5 | C2 | C1 |
| Torche à plasma | | ProPlasmaHP | | | | | | |
| Diamètre de l'anode | | 6,5 mm | | | | | | |
| Générateur de puissance | Courant (A) | 650 | | | | | | |
| | Tension (V) | 74 | | | | | | |
| | Puissance (kW) | 48 | | | | | | |
| Gaz plasmagène | Argon (l/min) | 40 | | | | | | |
| | Hydrogène (l/min) | 13 | | | | | | |
| | Hélium (l/min) | 0 | | | | | | |
| Projection de la poudre | Gaz vecteur | Ar | | | | | | |
| | Débit du gaz vecteur (l/min) | 5,0 | | | | | | |
| | Débit d'injection de la poudre (g/min) | 50 | 70 | 70 | 70 | 50 | 50 | |
| | Distance de projection (distance entre la sortie de la torche et le substrat) (mm) | 100 | 120 | 120 | 120 | 100 | 100 | |
| | Diamètre de l'orifice pour l'injection de la poudre à projeter | 1,8mm | | | | | | |
| | Distance entre l'injecteur et l'axe X du jet de plasma | 6,0 mm | | | | | | |
| | Angle d'injection par rapport à l'axe X du jet de plasma | 90° | | | | | | |
| Revêtement | Porosité (%) | 0,7 | 1,0 | 1,9 | 1,9 | 1,4 | 3,0 | 1,8 |
| | Rendement de dépôt (%) | 60,5 | 57,2 | 21,9 | 30,6 | 45 | 40 | 49 |
| | Productivité de projection (g/min) | 30 | 40 | 15 | 21 | 32 | 20 | 25 |
| * : hors invention | | | | | | | | |

Les revêtements des exemples de l'invention sont très denses et sont fabriqués avec un bon rendement de dépôt et une bonne productivité de projection.

Les exemples comparatifs 3* et 4* montrent, respectivement, que l'utilisation d'une poudre d'alimentation non-consolidée ou d'une poudre d'alimentation frittée au lieu de poudre d'alimentation selon l'invention (poudre d'alimentation résultant d'une fusion par plasma de granules non consolidés : I1 et I5) augmente considérablement la porosité du revêtement.

Les exemples 5 et 6* montrent qu'une augmentation de l'indice de dispersion de taille augmente la porosité du revêtement.

L'exemple comparatif 7 * montre que l'utilisation d'une poudre ayant une fraction élevée de particules ayant une taille inférieure ou égale à 5 $\mu$m [microns] augmente la porosité du revêtement.

Il est maintenant clair que l'invention fournit une poudre d'alimentation présentant des distributions de taille et de densité apparente conférant une très haute densité au revêtement. En outre, cette poudre d'alimentation peut être efficacement projetée par plasma et avec une bonne productivité.

Bien entendu, l'invention n'est pas limitée aux modes de réalisation décrits et représentés.

**Revendications**

1. Poudre de particules, plus de 95% en nombre desdites particules présentant une circularité supérieure ou égale à 0,85, ladite poudre contenant plus de 99,8% d'un oxyde de terre rare et/ou d'oxyde d'hafnium et/ou d'un oxyde d'yttrium-aluminium, en pourcentage par masse sur la base des oxydes, et ayant :

   - une taille médiane de particule $D_{50}$ comprise entre 10 et 40 $\mu$m [microns] et un indice de dispersion de taille $(D_{90} - D_{10})/D_{50}$ inférieur à 3 ;
   - un pourcentage en nombre de particules ayant une taille inférieure ou égale à 5 $\mu$m qui est inférieur à 5% ;
   - un indice de dispersion de densité apparente $(P_{<50} - P)/P$ inférieur à 0,2,

   le volume spécifique cumulé des pores ayant un rayon inférieur à 1 $\mu$m étant inférieur à 10% du volume apparent de la poudre,

   dans laquelle les percentiles $D_n$ de la poudre sont les tailles de particule correspondant aux pourcentages, en nombre, de n%, sur la courbe de distribution cumulée de la taille des particules de la poudre, les tailles de particule étant classées par ordre croissant,

   la densité $P_{<50}$ étant la densité apparente de la fraction des particules ayant une taille inférieure ou égale à $D_{50}$, et la densité P étant la densité apparente de la poudre.

2. Poudre selon la revendication précédente, dans laquelle

   - la taille médiane des particules $D_{50}$ est supérieure à 15 $\mu$m, et/ou
   - l'indice de dispersion de taille $(D_{90}-D_{10})/D_{50}$ est inférieur à 2,2 et/ou supérieur à 0,4, et/ou
   - le pourcentage en nombre de particules ayant une taille inférieure à 10 micromètres, est inférieur à 3%, et/ou
   - la surface spécifique est inférieure à 3 m$^2$/g, et/ou
   - l'indice de dispersion de densité $(P_{<50}-P)/P$ est inférieur à 0,15.

3. Poudre selon l'une quelconque des revendications précédentes, dans laquelle

   - la taille médiane des particules $D_{50}$ est inférieure à 30 $\mu$m, et/ou
   - l'indice de dispersion de taille $(D_{90}-D_{10})/D_{50}$ est inférieur à 1,3, et/ou
   - le pourcentage en nombre des particules ayant une taille inférieure à 10 micromètres, est inférieur à 2%, et/ou
   - la surface spécifique est inférieure à 1m$^2$/g, et/ou
   - l'indice de dispersion de densité apparente $(P_{<50}-P)/P$ est inférieur à 0,1.

4. Poudre selon l'une quelconque des revendications précédentes, dans laquelle

   - l'indice de dispersion de taille $(D_{90}-D_{10})/D_{50}$ est supérieur à 0,7, et/ou
   - la surface spécifique est inférieure à 0,5 m$^2$/g.

5. Poudre selon l'une quelconque des revendications précédentes, dans laquelle la densité relative des particules est supérieure à 0,4.

6. Poudre selon la revendication précédente, dans laquelle la densité apparente des particules est supérieure à 2,25.

7. Procédé de fabrication d'une poudre selon l'une quelconque des revendications précédentes, en particulier destinée à être utilisée en tant que poudre d'alimentation pour une projection thermique, ledit procédé comprenant les étapes suivantes:

   a) granulation de particules de façon à obtenir une poudre de granules ayant une taille médiane $D_{50}$ comprise entre 20 et 60 $\mu$m [microns] et comprenant plus de 99,8% d'un oxyde de terre rare et/ou d'oxyde d'hafnium et/ou d'un oxyde d'yttrium-aluminium, en pourcentage en masse sur la base des oxydes ;

b) injection de ladite poudre de granules, *via* un gaz vecteur, à travers un injecteur jusqu'à un jet de plasma généré par un pistolet à plasma, de façon à obtenir des gouttelettes en fusion ;

c) refroidissement desdites gouttelettes en fusion, de façon à obtenir une poudre d'alimentation selon l'une quelconque des revendications précédentes ;

d) optionnellement, sélection granulométrique, de préférence par tamisage ou par classification pneumatique, de ladite poudre d'alimentation.

8. Procédé selon la revendication immédiatement précédente, dans lequel ledit pistolet à plasma est configuré pour générer ledit jet de plasma autour d'un axe X formant un angle $\alpha$ inférieur à 30° avec une ligne verticale.

9. Procédé selon l'une quelconque des deux revendications immédiatement précédentes, dans lequel un fluide de refroidissement, de préférence de l'air, est injecté dans ledit jet de plasma de manière à refroidir lesdites gouttelettes, le fluide de refroidissement étant injecté vers l'aval du jet de plasma, et l'angle $\gamma$ entre le trajet des gouttelettes et le trajet du fluide de refroidissement étant inférieur ou égale à 80°.

10. Procédé selon la revendication immédiatement précédente, dans lequel un flux annulaire de fluide de refroidissement est généré autour de l'axe X.

11. Procédé selon l'une des deux revendications immédiatement précédentes, dans lequel la distance minimale entre une surface extérieure d'une anode dudit pistolet à plasma et la zone où les gouttelettes entrent en contact avec ledit gaz de refroidissement est comprise entre 50 mm et 400 mm.

12. Procédé selon l'une des cinq revendications immédiatement précédentes, dans lequel la granulation comprend une atomisation.

13. Procédé de projection thermique comprenant une étape de projection thermique d'une poudre selon l'une quelconque des revendications 1 à 6 ou fabriquée selon l'une quelconque des revendications 7 à 12.

14. Chambre de traitement pour semi-conducteurs, ladite chambre comprenant une paroi protégée par un revêtement, ledit revêtement comprenant plus de 99,95% d'un oxyde de terre rare et/ou d'un composé de lanthanide, en pourcentage en masse sur la base des oxydes, et présentant une porosité inférieure ou égale à 1,5%, ledit revêtement étant obtenu par projection thermique d'une poudre selon l'une quelconque des revendications 1 à 6 ou fabriqué suivant un procédé selon l'une quelconque des revendications de 7 à 12.

**Patentansprüche**

1. Pulver aus Teilchen, wobei mehr als 95 % der Teilchen eine Zirkularität größer oder gleich 0,85 aufweisen, wobei das Pulver mehr als 99,8 Gew.-% eines Seltenerd-Oxids und/oder eines Hafnium-Oxids und/oder eines Yttrium-Aluminium-Oxids in Massenprozent, bezogen auf Oxide, enthält und mit:

- einer Median-Größe der Teilchen $D_{50}$ zwischen 10 und 40 $\mu$m [Mikrometer] und einem Größen-Dispersionsindex $(D_{90} - D_{10})/D_{50}$ kleiner als 3;
- einem Prozentsatz von Teilchen mit einer Größe von weniger als oder gleich 5 $\mu$m, der weniger als 5 % beträgt;
- einem Schüttdichte-Dispersionsindex $(P_{<50} - P)P$ kleiner als 0,2,

wobei das kumulative spezifische Volumen von Poren mit einem Radius von weniger als 1 $\mu$m weniger als 10 % des Schüttvolumens des Pulvers beträgt, wobei die Prozentsätze $D_n$ des Pulvers die Teilchengrößen sind, die den Prozentsätzen von n% auf der kumulativen Teilchengrößenverteilungskurve des Pulvers entsprechen, wobei die Teilchengrößen in aufsteigender Reihenfolge klassifiziert sind, wobei die Dichte $P_{<50}$ die Schüttdichte des Bruchteils der Teilchen mit einer Größe kleiner oder gleich $D_{50}$ ist und die Dichte $P$ die Schüttdichte des Pulvers ist.

2. Pulver nach dem vorangehenden Anspruch, wobei

- die Median-Größe der Teilchen $D_{50}$ größer als 15 $\mu$m ist, und/oder
- der Größen-Dispersionsindex $(D_{90}-D_{10})/D_{50}$ kleiner als 2,2 und/oder größer als 0,4 ist, und/oder
- der zahlenmäßige Prozentsatz der Teilchen mit einer Größe von weniger als 10 Mikrometern weniger als 3 % beträgt und/oder
- die spezifische Oberfläche weniger als 3 $m^2$/g beträgt, und/oder
- der Dichte-Dispersionsindex $(P_{<50}-P)/P$ kleiner als 0,15 ist.

3. Pulver nach einem der vorangehenden Ansprüche, wobei

- die Median-Größe der Teilchen $D_{50}$ weniger als 30 $\mu$m beträgt, und/oder
- der Größen-Dispersionsindex $(D_{90}-D_{10})/D_{50}$ kleiner als 1,3 ist, und/oder
- der zahlenmäßige Prozentsatz der Teilchen mit einer Größe von weniger als 10 Mikrometern weniger als 2 % beträgt und/oder
- die spezifische Oberfläche weniger als 1 $m^2$/g beträgt, und/oder
- der Schüttdichte-Dispersionsindex $(P_{<50}-P)P$ kleiner als 0,1 ist.

4. Pulver nach einem der vorangehenden Ansprüche, wobei

- der Größen-Dispersionsindex $(D_{90}-DF_{10})/D_{50}$ größer als 0,7 ist und/oder
- die spezifische Oberfläche kleiner als 0,5 $m^2$/g ist.

5. Pulver nach einem der vorangehenden Ansprüche, wobei die relative Dichte der Teilchen größer als 0,4 ist.

6. Pulver nach dem vorangehenden Anspruch, wobei die Schüttdichte der Teilchen größer als 2,25 ist.

7. Verfahren zur Herstellung eines Pulvers nach einem der vorangehenden Ansprüche, insbesondere zur Verwendung als Beschichtungspulver für das thermische Spritzen, wobei das Verfahren die folgenden Schritte umfasst:

(a) Granulieren von Teilchen, um ein Pulver aus Granulaten mit einer Median-Größe $D_{50}$ zwischen 20 und 60 $\mu$m [Mikrometer] zu erhalten, und das mehr als 99,8 % eines Seltenerd-Oxids und/oder Hafniumoxids und/oder Yttrium-Aluminiumoxids in Massenprozent, bezogen auf die Oxide, umfasst;
(b) Einspritzen des Granulatpulvers über ein Trägergas durch einen Injektor in einen von einer Plasmakanone erzeugten Plasmastrahl, um geschmolzene Tröpfchen zu erhalten;
(c) Kühlen der geschmolzenen Tröpfchen, um ein Einsatzpulver nach einem der vorangehenden Ansprüche zu erhalten;
(d) gegebenenfalls granulometrische Auswahl des Einsatzpulvers, vorzugsweise durch Sieben oder pneumatische Klassifizierung.

8. Verfahren nach dem unmittelbar vorangehenden Anspruch, wobei die Plasmakanone konfiguriert ist, um den Plasmastrahl um eine X-Achse zu erzeugen, die einen Winkel $\alpha$ von weniger als 30° mit einer vertikalen Linie bildet.

9. Verfahren nach einem der beiden unmittelbar vorangehenden Ansprüche, wobei ein Kühlfluid, vorzugsweise Luft, in den Plasmastrahl eingespritzt wird, um die Tröpfchen zu kühlen, wobei das Kühlfluid stromabwärts des Plasmastrahls eingespritzt wird und der Winkel $\gamma$ zwischen dem Tröpfchenweg und dem Kühlfluidweg weniger oder gleich 80° beträgt.

10. Verfahren nach dem unmittelbar vorangehenden Anspruch, wobei ein ringförmiger Kühlmittelstrom um die X-Achse erzeugt wird.

11. Verfahren nach einem der beiden unmittelbar vorangehenden Ansprüche, wobei der Mindestabstand zwischen einer Außenfläche einer Anode der Plasmakanone und dem Bereich, in dem die Tropfen mit dem Kühlgas in Kontakt kommen, zwischen 50 mm und 400 mm liegt.

12. Verfahren nach einem der unmittelbar vorangehenden fünf Ansprüche, wobei die Granulierung Zerstäuben umfasst.

13. Thermisches Spritzverfahren, umfassend einen Schritt des thermischen Sprühens eines Pulvers nach einem der Ansprüche 1 bis 6 oder hergestellt nach einem der Ansprüche 7 bis 12.

14. Halbleiterbehandlungskammer, wobei die Kammer eine durch eine Beschichtung geschützte Wand umfasst, wobei die Beschichtung mehr als 99,95 % eines Seltenerd-Oxids und/oder einer Lanthanidverbindung in Massenprozent, bezogen auf die Oxide, umfasst und eine Porosität von 1,5 % oder weniger aufweist, wobei die Beschichtung durch thermisches Sprühen eines Pulvers nach einem der Ansprüche 1 bis 6 erhalten oder durch ein Verfahren nach einem der Ansprüche 7 bis 12 hergestellt wird.

**Claims**

1. A powder formed of particles, more than 95% by number of said particles exhibiting a circularity of greater than or equal to 0.85, said powder comprising more than 99.8% of a rare earth metal oxide and/or of hafnium oxide and/or of an yttrium-aluminum oxide, as percentage by weight on the basis of the oxides, and having:

   - a median particle size $D_{50}$ of between 10 and 40 $\mu$m [microns] and a size dispersion index $(D_{90} - D_{10})/D_{50}$ of less than 3;
   - a percentage by number of particles having a size of less than or equal to 5 $\mu$m which is less than 5%;
   - a bulk density dispersion index $(P_{<50} - P)/P$ of less than 0.2,

   the cumulative specific volume of the pores having a radius of less than 1 $\mu$m being less than 10% of the bulk volume of the powder,
   in which the $D_n$ percentiles of the powder are the particle sizes corresponding to the percentages, by number, of n%, on the cumulative distribution curve of the size of the particles of the powder, the particle sizes being classified by increasing order,
   the density $P_{<50}$ being the bulk density of the fraction of the particles having a size of less than or equal to $D_{50}$, and the density P being the bulk density of the powder.

2. The powder as claimed in the preceding claim, in which:

   - the median size of the particles $D_{50}$ is greater than 15 $\mu$m, and/or
   - the size dispersion index $(D_{90}-D_{10})/D_{50}$ is less than 2.2 and/or greater than 0.4, and/or
   - the percentage by number of particles having a size of less than 10 micrometers is less than 3%, and/or
   - the specific surface is less than 3 m$^2$/g, and/or
   - the density dispersion index $(P_{<50}-P)/P$ is less than 0.15.

3. The powder as claimed in either one of the preceding claims, in which:

   - the median size of the particles $D_{50}$ is less than 30 $\mu$m, and/or
   - the size dispersion index $(D_{90}-D_{10})/D_{50}$ is less than 1.3, and/or
   - the percentage by number of the particles having a size of less than 10 micrometers is less than 2%, and/or
   - the specific surface is less than 1 m$^2$/g, and/or
   - the bulk density dispersion index $(P_{<50}-P)/P$ is less than 0.1.

4. The powder as claimed in any one of the preceding claims, in which:

   - the size dispersion index $(D_{90}-D_{10})/D_{50}$ is greater than 0.7, and/or
   - the specific surface is less than 0.5 m$^2$/g.

5. The powder as claimed in any one of the preceding claims, in which the relative density of the particles is greater than 0.4.

6. The powder as claimed in the preceding claim, in which the bulk density of the particles is greater than 2.25.

7. A process for the manufacture of a powder as claimed in any one of the preceding claims, in particular intended to be used as feed powder for thermal spraying, said process comprising the following stages:

   a) granulation of particles so as to obtain a powder formed of granules having a median size $D_{50}$ of between 20 and 60 $\mu$m [microns] and comprising more than 99.8% of a rare earth metal oxide and/or of hafnium oxide and/or of an yttrium-aluminum oxide, as percentage by weight on the basis of the oxides;
   b) injection of said powder formed of granules, *via* a carrier gas, through an injector as far as a plasma jet generated by a plasma gun, so as to obtain molten droplets;
   c) cooling said molten droplets, so as to obtain a feed powder according to any one of the preceding claims;

d) optionally, particle size selection, preferably by sieving or by air classification, of said feed powder.

8. The process as claimed in the immediately preceding claim, in which said plasma gun is configured in order to generate said plasma jet around an axis X forming an angle $\alpha$ of less than 30° with a vertical line.

9. The process as claimed in either one of the two immediately preceding claims, in which a cooling fluid, preferably air, is injected into said plasma jet so as to cool said droplets, the cooling fluid being injected toward the downstream direction of the plasma jet and the angle $\gamma$ between the path of the droplets and the path for the cooling fluid being less than or equal to 80°.

10. The process as claimed in the immediately preceding claim, in which an annular stream of cooling fluid is generated around the axis X.

11. The process as claimed in either of the two immediately preceding claims, in which the minimum distance between an external surface of an anode of said plasma gun and the region where the droplets come into contact with said cooling gas is between 50 mm and 400 mm.

12. The process as claimed in one of the five immediately preceding claims, in which the granulation comprises an atomization.

13. A thermal spraying process comprising a stage of thermal spraying of a powder as claimed in any one of claims 1 to 6 or manufactured as claimed in any one of claims 7 to 12.

14. A treatment chamber for semiconductors, said chamber comprising a wall protected by a liner, said liner comprising more than 99.95% of a rare earth metal oxide and/or of a lanthanide compound, as percentage by weight on the basis of the oxides, and exhibiting a porosity of less than or equal to 1.5%, said liner being obtained by thermal spraying of a powder as claimed in any one of claims 1 to 6 or manufactured according to a process as claimed in any one of claims 7 to 12.

Fig. 1

Fig. 2

Injection de la poudre de granules SDO dans le jet de plasma

Fusion desdites particules en gouttelettes

Refroidissement rapide desdites gouttelettes

Récupération de la poudre d'alimentation

Classification granulométrique de la poudre (optionnelle)

Fig. 3

$=A_p$  
$P_p$  
$P'$  
$A_p$  
$P_D$  
D

Fig. 4

Fig. 5

x1,5k   50 um

Fig. 6

x2,0k   30 um

Fig. 7

L   x2,0k   30 um

**EP 2 925 673 B1**

## RÉFÉRENCES CITÉES DANS LA DESCRIPTION

**Documents brevets cités dans la description**

- US 6916534 B
- US 2007077363 A
- US 20080112873 A
- US 7931836 B
- US 20110129399 A
- WO 2010103497 A

**Littérature non-brevet citée dans la description**

- *Journal of American Chemical Society,* 1938, vol. 60, 309-316